# EUROPÄISCHE PATENTANMELDUNG

(11) **EP 0 818 265 A1**
(43) Veröffentlichungstag der Anmeldung: **14.01.1998**
(21) Anmeldenummer: 97109722.5
(22) Anmeldetag: 14.06.1997
(51) Int. Cl.: B23D 31/00, B23D 15/00

(54) **Schervorrichtung und Verfahren zur Herstellung einer Schervorrichtung**

(30) Priorität: 18.06.1996 DE 19624214
(71) Anmelder: Marx, Helmut Karl, 40545 Düsseldorf (DE)
(72) Erfinder: Marx, Helmut Karl, 40545 Düsseldorf (DE)
(74) Vertreter: Stenger, Watzke & Ring Patentanwälte

(57) **Zusammenfassung**

Die Erfindung betrifft ein Verfahren zur Herstellung einer Schervorrichtung, wobei
a) ein erstes Messer an einem ersten Rahmenelement angeordnet wird,
b) ein zweites Messer an einem zweiten Rahmenelement angeordnet wird,
c) beide Rahmenelemente zueinander relativbeweglich derart angeordnet werden, daß die Messer in Art einer Scherschneide gegeneinander führbar sind, und
d) zwischen beiden Rahmenelementen diese relativ zueinander bewegende Krafterzeugungseinrichtungen angeordnet werden.

Es ergibt sich somit eine neue Schervorrichtung 1 mit einem Obermesser 7, einem Untermesser 14, einer Krafterzeugungseinheit 13 und einem Niederhalterelement 8, wobei das Obermesser 7 und das Untermesser 14 jeweils an einem Rahmenelement 3,4 angeordnet sind, und wobei beide Rahmenelemente unter der Kraft der Krafterzeugungsvorrichtung relativ zueinander bewegbar sind.

## Beschreibung

Die vorliegende Erfindung betrifft eine Schervorrichtung, also eine industrielle Schere, sowie ein Verfahren zu ihrer Herstellung.

Industrielle Scheren der gattungsgemäßen Art werden für die unterschiedlichsten Anwendungen eingesetzt, beispielsweise zum Schneiden von Schrott, Schutt, Müll, Knüppel, Strängen oder dergleichen Material. Üblicherweise weisen industrielle Scheren der gattungsgemäßen Art einen sogenannten Scherenständer auf, in welchem in einem Rahmen ein festsitzendes Untermesser und in einer Führung ein demgegenüber bewegliches Obermesser angeordnet sind. Das Obermesser wird durch die Kraft eines Hydraulikzylinders bewegt. Zwischen dem Obermesser und dem Untermesser verbleibt das sog. Scherenmaul, in welches zu schneidendes Material geführt wird. Normalerweise wird das zu schneidende Material aus einem Scherenbett mittels eines Schiebers in das Scherenmaul geschoben. Durch eine meist ebenfalls hydraulische Haltevorrichtung wird das zu schneidende Material gehalten, während das Obermesser unter Abscherung des Materials gegen das Untermesser geführt wird.

Es ist bekannter Stand der Technik, das Obermesser und das Untermesser in der Art einer Scherschneide anzuordnen. Industrielle Scheren der beschriebenen Art werden in erster Linie stationär verwendet, da sie eine aufwendige Lagerung benötigen, denn die hydraulischen Stöße müssen abgefangen werden. Die Kräfte können bis in Größenordnungen von mehreren hundert Tonnen Scherkraft gehen.

Wenngleich mobile Lösungen bekannt sind, ist regelmäßig ein großer Montage- und Wartungsaufwand zu treiben. Die bekannten Scheren sind insbesondere bei der Anwendung für Schrott sehr störungsanfällig, da sich häufig Schrott in den erforderlichen Führungen verklemmt.

Ausgehend von diesem Stand der Technik ist es die Aufgabe der vorliegenden Erfindung, eine Schervorrichtung der gattungsgemäßen Art dahingehend zu verbessern, daß diese mit geringem wirtschaftlichen Aufwand herstellbar, mobil einsetzbar und störunanfällig ist. Weiterhin soll ein Verfahren zur Herstellung einer derartigen Schere bereitgestellt werden.

Verfahrensseitig wird zur techn. Lösung dieser Aufgabe ein Verfahren zur Herstellung einer Schervorrichtung vorgeschlagen, wobei
a) ein erstes Messer an einem ersten Rahmenelement angeordnet wird,
b) ein zweites Messer an einem zweiten Rahmenelement angeordnet wird,
c) beide Rahmenelemente zueinander relativbeweglich derart angeordnet werden, daß die Messer in Art einer Scherschneide gegeneinander führbar sind, und
d) zwischen beiden Rahmenelementen diese relativ zueinander bewegende Krafterzeugungseinrichtungen angeordnet werden.

Durch das erfindungsgemäße Herstellungsverfahren kann einerseits auf verschiedene Bauteile verzichtet werden, beispielsweise auf die üblichen Scherenständer, in welchen normalerweise das Obermesser in einer Vertikalführung geführt gegenüber dem Untermesser bewegbar ist. Dadurch, daß nunmehr die beiden die Messer aufnehmenden Rahmenelemente selbst relativ zueinander bewegbar sind, lassen sich die erforderlichen Kräfte viel einfacher aufbringen. Die erfindungsgemäße Schervorrichtung ist auf eine Mindestzahl von Modulen reduziert, somit sehr mobil und nicht Störungsanfällig. Durch das neue Verfahren wird die Herstellung sehr wirtschaftlich.

In vorteilhafter Weise ist eines der Rahmenelemente ein Frontschild mit einer Hebelrahmeneinheit. Diese Frontschildeinheit eignet sich zur Aufnahme des Obermessers. Dieses ist in dieser Einheit ortsfest fixiert. Dies heißt nicht, daß nicht geringe Relativbewegungen zu Zwecken der Abfederung oder der Justierung möglich sein können, sondern nur, daß keine zum Zwecke eines Schneidvorganges erforderlichen Relativbewegungen möglich sind. Gemäß einem weiteren vorteilhaften Vorschlag der Erfindung ist eine der Rahmeneinheiten ein Scherenbett. Dieses Scherenbett eignet sich zur Aufnahme eines Untermessers, welches in der oben beschriebenen Weise am Scherenbett angeordnet wird.

Mit besonderen Vorteil wird mit der Erfindung vorgeschlagen, daß die beiden Rahmenelemente gegeneinander verschwenkbar angeordnet werden. Hierzu eignet sich die Anordnung eines Drehgelenkes.

Alternativ kann gemäß einem vorteilhaften Vorschlag der Erfindung zwischen beiden Rahmenelementen eine Querschlittenführung angeordnet werden. Die Rahmenelemente sind dann über diese Querschlittenführung relativ zueinander bewegbar.

Mit Vorteil wird vorgeschlagen, daß als Krafterzeugungseinheit Hydraulikzylinder zwischen den beiden Rahmenelementen angeordnet werden. Mit Vorteil werden diese Hydraulikzylinder derart angeordnet, daß diese die erforderlichen Kräfte zum Schneiden als reine Druckelemente erzeugen.

Mit der Erfindung wird ein neues Verfahren zur Herstellung einer Schervorrichtung vorgeschlagen, wonach nunmehr die Schermesser an Rahmenelementen angeordnet werden. Die Rahmenelemente werden relativ zueinander derart angeordnet, daß sie gegeneinander verschwenkbar oder verschiebbar positioniert sind. Zwischen beiden Rahmenelementen werden vorzugsweise Hydraulikzylinder angeordnet. Sie wirken vorzugsweise nur als reine Druckkrafterzeugungseinheiten.

Diese nach dem neuen Verfahren hergestellte Schervorrichtung ist sehr mobil, mit geringem wirtschaftlichen Aufwand herstellbar und aufbaubar sowie störunanfällig.

Vorrichtungsseitig wird die o.g. Aufgabe gelöst durch eine Schervorrichtung mit einem Obermesser, einem Untermesser, einer Krafterzeugungseinheit und einem Niederhalterelement, wobei das Obermesser und das Untermesser jeweils an einem Rahmenelement angeordnet sind, wobei beide Rahmenelemente unter der Kraft der Krafterzeugungsvorrichtung relativ zueinander bewegbar sind.

Die erfindungsgemäße Vorrichtung umfasst nur eine geringe Anzahl von Elementen, die in einfacher Weise wirtschaftlich herstellbar sind und störunanfällig einsetzbar sind. Dies gilt insbesondere auch dann, wenn die Schervorrichtung als Schrottschere und dergleichen verwendet wird.

Eines der Rahmenelemente ist gemäß einem Vorschlag der Erfindung ein Scherenbett, welches vorzugsweise der Sitz für das Untermesser ist. Ein weiteres Rahmenelement ist gemäß einem weiteren Vorschlag der Erfindung ein Frontrahmen, auch Frontschild genannt, welches vorzugsweise der Sitz für ein Obermesser ist. Beide genannten Rahmenelemente sind miteinander verbunden und gegeneinander bewegbar, wozu zwischen ihnen die Krafterzeugungsvorrichtung wirkt. Diese Vorrichtung wird vorzugsweise durch Hydraulikzylinder realisiert, wobei zur Vermeidung von Verdrehmomenten Hydraulikzylinder möglichst paarweise verwendet werden. So werden gemäß einem Vorschlag der Erfindung zwischen dem Scherenbett und den Frontschild wirkende Hydraulikzylinder paarweise angeordnet.

Gemäß einem besonders vorteilhaften Vorschlag der Erfindung werden die Rahmenelemente mittels einer Exzenterverstellung verbunden, um somit durch die Verdrehung von einem oder mehreren Exzentern die Projektionslage der Schneiden justieren zu können. Diese einfache Maßnahme ermöglicht ein Einstellen bzw. ein Nachstellen der Vorrichtung.

Gemäß einem weiteren vorteilhaften Vorschlag der Erfindung wird wenigstens eines der beiden Messer im Seitenkantenbereich mit einer Einkammerung versehen. Diese Maßnahme dient der Verbesserung des Betriebsverhaltens der Vorrichtung, da ein Einklemmen von zu schneidendem Material weitestgehend vermieden wird.

Ein weiterer wesentlicher Aspekt der Erfindung besteht in der Anordnung eines Niederhalters am Frontschild. Ein am das Frontschild bildenden Rahmenelement angeordneter Niederhalter ist vorzugsweise elastisch gelagert, wozu Federelemente oder alternativ bzw. zusätzlich hydraulische Elemente verwendet werden. Ein Vorteil dieser Anordnung besteht darin, daß der Niederhalter nicht auf das zu schneidende Material vorgeschoben werden muß, sondern bei der Relativbewegung der beiden Rahmenelemente automatisch mit dem zu schneidenden Material in Kontakt gelangt. Erst jetzt ist das Aufbringen entsprechender Haltekräfte erforderlich.

Gemäß einem weiteren vorteilhaften Vorschlag der Erfindung steht ein Messer gegenüber dem anderen Messer beidseitig über. Auch diese Maßnahme verhindert ein unerwünschtes Einklemmen von Material in Führungen bei einem Schneidvorgang.

Gemäß einem besonders vorteilhaften Vorschlag der Erfindung werden die Rahmenelemente relativ zueinander verschwenkbar angeordnet. Im Prinzip reduziert sich die Anzahl von Rahmenelementen auf zwei Elemente, selbst wenn jedes der beiden Elemente aus einer Mehrzahl von Rahmenelementen, Rahmenteilen oder dergleichen bestehen kann. Wesentlich ist, daß ein Rahmenelementkomplex zur Aufnahme eines Obermessers und ein weiterer Rahmenelementkomplex zur Aufnahme eines Untermessers vorhanden ist, wobei beide Rahmenelementkomplexe gegeneinander verschwenkbar sind. Mit besonderen Vorteil wird das Verschwenken ermöglicht, indem beide Rahmenelemente im Bereich einer gemeinsamen Schwenkachse angelenkt sind. In vorteilhafter Weise ist die Schwenkachse am hinteren Bereich des Scherenbettes angeordnet. Bei der Verwendung eines Scherenbettes wird an einem Ende des Bettes, welches im wesentlichen aus einem länglichen U-förmigen Profil besteht, ein Untermesser angeordnet. An dem jeweils anderen Ende kann dann die Schwenkachse positioniert werden. Dieses andere Ende ist als "hinteres" bezeichnet. Gemäß einen weiteren Vorschlag der Erfindung wird das Frontschild mit einen Rahmenelement versehenen, welches das Scherenbett unterfängt, um das Frontschild an der Schwenkachse am hinteren Bereich des Scherenbettes anzubinden. Durch diese Maßnahme bleiben die Seitenbereiche des Scherenbettes frei, beispielsweise zur Anordnung von Hydraulikelementen oder sonstigen Funktionseinheiten (Visier-System).

Gemäß einem alternativen Vorschlag der Erfindung sind die beiden Rahmenelemente parallelogrammartig verbunden, so daß eine Relativbewegung zwischen beiden Rahmenelementen durch eine Parallelogrammverschiebung bewirkt wird.

Weiterhin wird mit der Erfindung vorgeschlagen, daß die beiden Rahmenelemente durch eine Querschlittenführung miteinander verbunden sind. Somit sind die beiden Rahmenelemente in einem im wesentlichen 90°-Winkel zueinander verschiebbar. Zu diesem Zweck kann das Frontschild mit einem Kastenrahmen versehen sein, dessen hinterer Bereich mittels einer Querschlittenführung am Scherenbett befestigt ist (Parallel-System).

Mit der Erfindung wird eine neuartige Schervorrichtung bereitgestellt, welche mit einem Minimum an Elementen wirtschaftlich herstellbar, mobil und Störunanfällig betreibbar ist. An einen Scherenbett, welches üblicherweise ein längliches, U-förmiges Profilelement ist, wird an dessen einem Ende ein Untermesser befestigt. An diesem Ende wird auch ein Frontschild mit einem Obermesser angeordnet. Beiden werden gegeneinander verschwenkbar oder verschiebbar miteinander verbunden. Dies erfolgt beispielsweise durch ein Anlenken im Bereich einer Schwenkachse oder eine Verbindung mittels einer Querschlittenführung.

Zwischen beiden entstehenden Rahmenelementen werden dann beispielsweise Hydraulikzylinder als Druckelemente angeordnet, so daß durch Aufbringen des entsprechenden Druckes beide Rahmenelemente relativ zueinander bewegt werden, so daß die Messer in Art einer Scherbewegung zueinander geführt werden. Zusätzlich kann im Frontschild oder an einer anderen geeigneten Stelle eines der Rahmenelemente ein Niederhalter angeordnet werden, welcher unter der Kraft von Federn, Hydraulikelementen oder dergleichen seine Haltefunktion bei der Durchführung eines Schneidvorganges ausübt.

Diese wirtschaftlich und einfach aufgebaute Schervorrichtung wird gemäß der Erfindung nach einem neuen und einfachen Verfahren hergestellt. Gegenüber Schervorrichtungen, die aus dem Stand der Technik bekannt sind, sind das Herstellungsverfahren und die Vorrichtung selbst einfach und störunanfällig.

Ein weiterer wichtiger Anwendungsfall ist der Einsatz als stationäres Müllbett mit Schneid- und Zerkleinerungsvorrichtung.

Weitere Vorteile und Merkmale der Erfindung ergeben sich aus der folgenden Beschreibung anhand der Figuren. Dabei zeigen:
- Figur 1:: eine schematische Seitenansicht eines Ausführungsbeispiels einer Schervorrichtung;
- Figur 2:: eine schematische Draufsicht auf das Ausführungsbeispiel gemäß Figur 1;
- Figur 3:: eine Teilansicht im Bereich des Scherenmauls der Vorrichtung gemäß Figur 1, 2;
- Figur 4:: eine weitere Teilansicht im Bereich des Scherenmauls der Vorrichtung gemäß Figur 1, 2;
- Figur 5:: eine schematische Seitenansicht eines weiteren Ausführungsbeispiels einer Schervorrichtung und
- Figur 6:: eine schematische Draufsicht auf das Ausführungsbeispiel gemäß Figur 5.

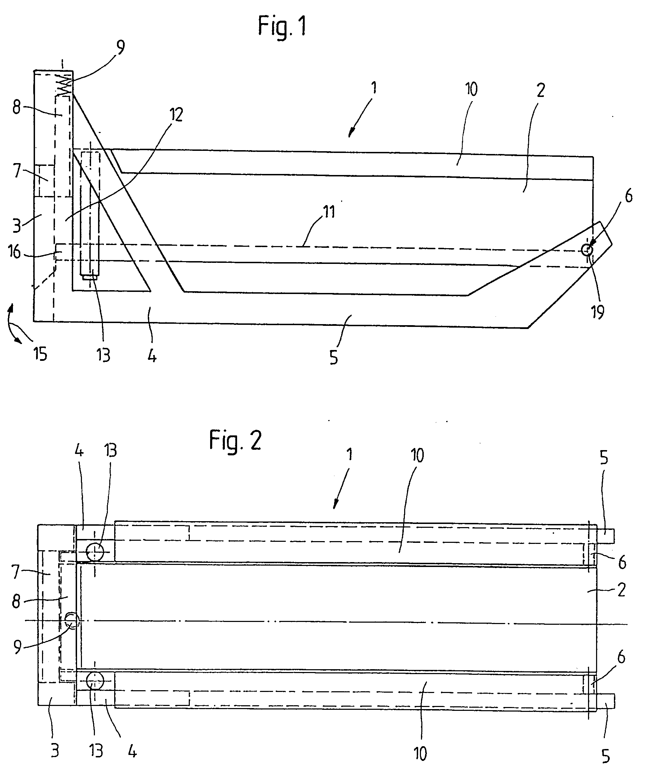

Figuren 1 bis 4 zeigen ein erstes Ausführungsbeispiel für eine erfindungsgemäße Schere 1, welche ein Scherenbett 2 und ein Frontschild 3 umfasst. Das Frontschild 3 ist mit einem Rahmen 4, welcher eine Schwinge 5 aufweist, verbunden oder einstückig ausgebildet. An der Lagerung 6 sind das Scherenbett und die Schwinge 5 miteinander verschwenkbar verbunden.

In dem Frontschild 3 sind ein Obermesser 7 und durch eine Feder 9 elastisch bewegbar ein Niederhalter 8 angeordnet. Das Scherenbett 2 hat ein oberes Randblech, welches im gezeigten Ausführungsbeispiel als Trichterwandlech 10 ausgebildet ist. Die Lagerung 6 ist in Höhe der Oberkantenlinie 11 des Untermessers 14 positioniert . Das Scherenbett ist in an sich bekannter Weise ein längliches, U-förmiges Element. Eine zum Stand der Technik gehörende, nicht gezeigte Schiebervorrichtung sorgt üblicherweise dafür, daß in das Scherenbett eingeführtes Material in Richtung des Scherenmauls 12 vorgeschoben wird. Damit beim Einfüllen von Material, beispielsweise Schrott oder dergleichen, kein Material daneben fallen kann, ist das Trichterrandblech ausgebildet.

Bei herkömmlich bekannten Ausführungen eines Scherenständers befinden sich für einen Messerschlitten mit Obermesser und für einen Niederhalter vertikale Funktionsführungen im unmittelbaren Bereich der Schneidöffnung bzw. des Scherenmauls. Zwangsläufig kommt es hier zu Störungen in den jeweiligen Führungen durch eingezogenen Schrott. Das beschriebene Scherensystem, vorzugsweise als Visiersystem zu bezeichnen, verzichtet demgegenüber ganz auf entsprechende Schlittenführungen zur Aufnahme der Messerfunktionen beziehungsweise der Niederhalterfunktion.

Die Führung des oberen Messers wird bei der Visierschere durch die am Scherenbett verschwenkbar bzw. drehbar gelagerte beidseitige Schwinge 5 bewirkt. Das Obermesser ist in dem Frontschild 3 angeordnet. Das Frontschild und die Schwingen 5 sind miteinander verbunden oder gar einstückig ausgebildet. Die beiden an jeweils einer Seite angeordneten Hydraulikzylinder werden dem Schneidhub entsprechend aus- bzw. eingefahren. Das Obermesser schneidet folglich das Material zusammen mit dem Untermesser, welches sich an einem Ende des Scherenbettes 2 befindet. Durch das einseitige Überstehen des Obermessers 7 gegenüber dem Untermesser 14 werden Verklemmungen durch Schrott, Müll usw. wirksam verhindert.

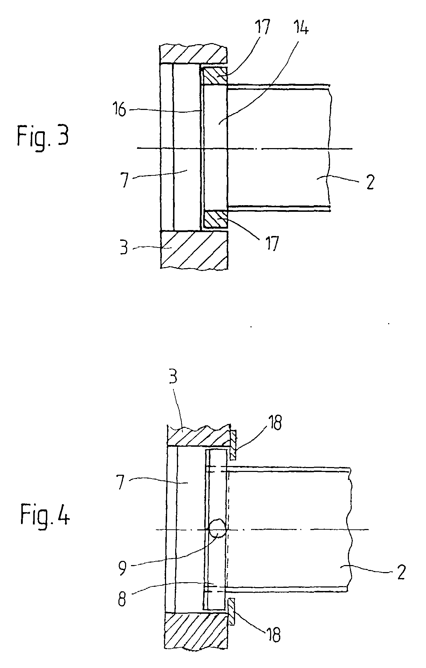

Um eine während des Schneidvorganges unerwünschte Torsion der Schwinge 5 zu minimieren, ist in dem Frontschild ein Rücksprung und in dem Scherenbett ein Vorsprung ausgebildet. Die in Figur 3, 4 gezeigte Einkammerung im Frontschild 3 bewirkt, daß Blockierungen durch eingezogenen Schrott usw. in den außerhalb des Schneidbereichs liegenden Führungen weitestgehend ausgeschlossen sind.

Zur Einstellung des Spieles von Obermesser und Untermesser zueinander ist im Bereich der Lagerung 6 ein Exzenter 19 angeordnet. Durch Drehen des Exzenters 19 kann die sog. Projektionslage der Schneiden eingestellt werden.

Im gezeigten Ausführungsbeispiel ist der Drehpunkt der Schwinge 5 fluchtend zu der Oberkante des Untermessers ausgerichtet. Die Oberkantenlinie ist mit 11 bezeichnet (Figur 1).

Die insbesondere in Figur 1 gezeigte nach unten weisende Abwinkelung der Schwinge 5 ermöglicht den bedarfsweisen Einbau von Scherenbett-Funktionen wie beispielsweise Deckel, Seitendruckpresse oder weiterer Verdichtungskomponenten. Das Trichterwandblech 10 schützt die darunter angeordnete Schwinge 5 vor herabfallendem Schrott usw. Der nicht gezeigte Schieber zum Zuführen des zu schneidenden Materials zum Scherenmaul ist mit der dazugehörigen Schiebertraverse, erforderlichen Hydraulikeinheiten und dergleichen demontierbar angeordnet. Soll die Schrottschere mobil und fahrbar ausgestaltet sein, wird diese komplette Schieberfunktionseinheit im Scherenbett transportiert.

Der Niederhalter 8 ist am bettseitig zugekehrten Teil des Frontschildes 3 angeordnet und bewegt sich mit diesem auf und ab. Die vor Beginn des Schneidvorganges notwendige Hilfskraft kann mechanisch durch den Druck einer Feder 9 oder hydraulisch durch Hydraulikzylinder bewirkt werden. Die Führung des Niederhalters 8 ist so ausgebildet, daß diese an der oberen Öffnung des freien Scherenmauls endet. Diese kurze Führung wird dadurch ermöglicht, daß der Niederhalter 8 mit dem Frontschild 3 auf- und abfährt und erst kurz vor Beginn des Schneidvorganges in Funktion tritt. Die vertikale Arbeitsbewegung des Niederhalters wird somit minimiert. Der Niederhalter verbleibt bei vertikaler Endlage zur Hälfte beidseitig geführt, während die untere Hälfte ohne Führung in das Scherenmaulprofil eintaucht (Figur 4). Der Niederhalter ist im wesentlichen T-förmig ausgebildet.

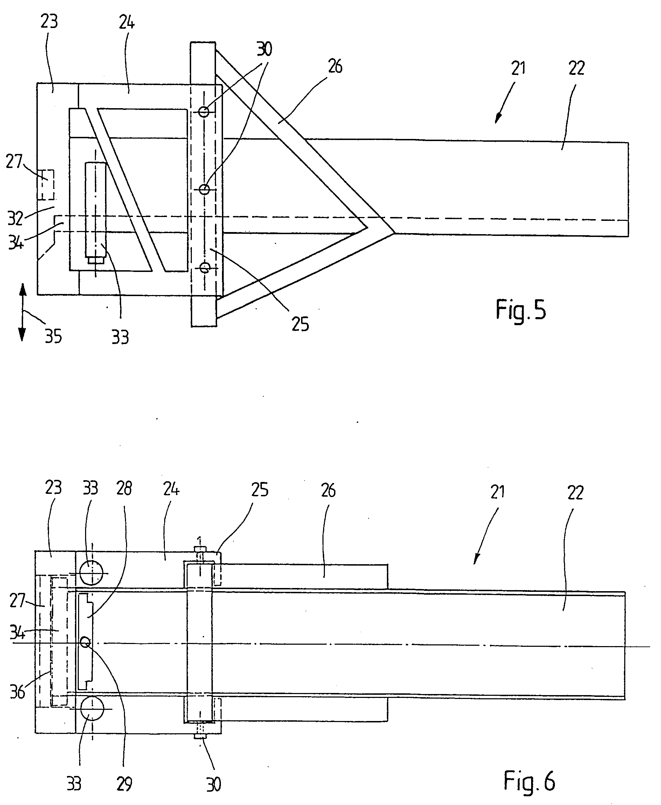

Ein alternatives bzw. weiteres Ausführungsbeispiel ist in den Figuren 5 und 6 gezeigt. Anstelle eines vorbekannten Scherenständers übernimmt bei der gezeigten Ausführungsform, vorzugsweise mit Parallel-Schere zu bezeichnen, eine Kastenkonstruktion die Führung des oberen Messers. Die Schere 21 umfasst das Scherenbett 22 und am vorderen Ende ist das Frontschild 23 angeordnet, welches mit einer Rahmenkonstruktion 24 an einer Querschlittenführung 25 angeordnet ist. Die dazu erforderliche Lagerung 26 ist ebenfalls aus Rahmenelementen gebildet und am Scherenbett 22 befestigt. Das Obermesser 27 sowie die weiteren Elemente, beispielsweise Niederhalter 28, Feder 29 und dergleichen, sind wie dargestellt oder auch in der gleichen wie zu den Figuren 1 bis 4 beschriebenen Weise angeordnet.

Die Querschlittenführung ist beidseitig des Scherenbettes ausgebildet und der vertikale Führungsweg entspricht dem Schneidhub der Schere. Der Schneidhub wird durch die beidseitig angeordneten Hydraulikzylinder 33 bewirkt, die einerseits an der Rahmenkonstruktion 24, andererseits am Scherenbett 22 angeordnet sind. Die Querschlittenführung umfasst die Verbindungselemente in Form der Exzenter 30, so daß das Spiel zwischen Obermesser 27 und Untermesser 34 einstellbar ist. Die Hubbewegung erfolgt entsprechend dem Bewegungspfeil 35. Auch im gezeigten Ausführungsbeispiel ist die Schiebereinheit nicht gezeigt.

Die beschriebenen Ausführungsbeispiele dienen nur der Erläuterung und sind nicht beschränkend. Wesentliches Merkmal der Erfindung ist, daß das Obermesser einerseits und das Untermesser andererseits an Rahmenkonstruktionen befestigt sind, welche relativ zueinander verschwenkt oder sonstwie bewegt werden.

### Bezugszeichen

- 1: Schere
- 2: Scherenbett
- 3: Frontschild
- 4: Rahmen
- 5: Schwinge
- 6: Lagerung
- 7: Obermesser
- 8: Niederhalter
- 9: Feder
- 10: Trichterrandblech
- 11: Oberkantenlinie
- 12: Scherenmaul
- 13: Hydraulikzylinder
- 14: Untermesser
- 15: Verschwenkpfeil
- 16: Projektionsschlitz
- 17: Begrenzung
- 18: Führungsleisten
- 19: Exzenter
- 21: Schere
- 22: Scherenbett
- 23: Frontschild
- 24: Rahmen
- 25: Querschlittenführung
- 26: Lagerung
- 27: Obermesser
- 28: Niederhalter
- 29: Feder
- 30: Exzenter
- 32: Scherenmaul
- 33: Hydraulikzylinder
- 34: Untermesser
- 35: Bewegungspfeil
- 36: Projektionsschlitz

## Patentansprüche

1. Verfahren zur Herstellung einer Schervorrichtung, wobei
a) ein erstes Messer an einem ersten Rahmenelement angeordnet wird,
b) ein zweites Messer an einem zweiten Rahmenelement angeordnet wird,
c) beide Rahmenelemente zueinander relativbeweglich derart angeordnet werden, daß die Messer in Art einer Scherschneide gegeneinander führbar sind, und
d) zwischen beiden Rahmenelementen diese relativ zueinander bewegende Krafterzeugungseinrichtungen angeordnet werden.

2. Verfahren zur Herstellung einer Schervorrichtung nach Anspruch 1, dadurch gekennzeichnet, daß als eines der Rahmenelemente ein Frontschild mit einer Hebelrahmeneinheit verwendet wird.

3. Verfahren nach einem der vorhergehenden Ansprüche, dadurch gekennzeichnet, daß als eines der Rahmenelemente ein Scherenbett verwendet wird.

4. Verfahren nach einen der vorhergehenden Ansprüche, dadurch gekennzeichnet, daß die Rahmenelemente mittels eines Drehgelenkes verbunden werden.

5. Verfahren nach einen der Ansprüche 1 bis 3, dadurch gekennzeichnet, daß die Rahmenelemente mittels einer Querschlittenführung verbunden werden.

6. Verfahren nach einem der vorhergehenden Ansprüche, dadurch gekennzeichnet, daß als Krafterzeugungseinheit Hydraulikzylinder verwendet werden.

7. Verfahren nach Anspruch 6, dadurch gekennzeichnet, daß die Hydraulikzylinder während eines Schneidvorganges als Druckelemente eingesetzt werden.

8. Schervorrichtung mit einem Obermesser, einem Untermesser, einer Krafterzeugungseinheit und einem Niederhalterelement, wobei das Obermesser und das Untermesser jeweils an einem Rahmenelement angeordnet sind, und wobei beide Rahmenelemente unter der Kraft der Krafterzeugungsvorrichtung relativ zueinander bewegbar sind.

9. Schervorrichtung nach Anspruch 8, dadurch gekennzeichnet, daß eines der Rahmenelemente ein Scherenbett ist.

10. Schervorrichtung nach Anspruch 9, dadurch gekennzeichnet, daß an einem Randbereich des Scherenbettes das Untermesser angeordnet ist.

11. Schervorrichtung nach einen der Ansprüche 8 bis 10, dadurch gekennzeichnet, daß eines der Rahmenelemente ein Frontschild ist.

12. Schervorrichtung nach Anspruch 11, dadurch gekennzeichnet, daß an dem Frontschild das Obermesser angeordnet ist.

13. Schervorrichtung nach einem der Ansprüche 8 bis 12, dadurch gekennzeichnet daß zur Erzeugung einer Relativbewegung zwischen den Rahmenelementen an diesen Hydraulikzylinder angeordnet sind.

14. Schervorrichtung nach einem der Ansprüche 8 bis 13, dadurch gekennzeichnet, daß im Verbindungsbereich der Rahmenelemente eine Verstelleinheit ausgebildet ist.

15. Schervorrichtung nach Anspruch 16, dadurch gekennzeichnet, daß die Verstelleinheit eine Exzentereinheit umfasst.

16. Schervorrichtung nach einem der Ansprüche 8 bis 15, dadurch gekennzeichnet, daß wenigstens eines der Messer durch eine Einkammerung geschützt ist.

17. Schervorrichtung nach einem der Ansprüche 8 bis 16, dadurch gekennzeichnet, daß an einem der Rahmenelemente ein Niederhalter angeordnet ist.

18. Schervorrichtung nach Anspruch 17, dadurch gekennzeichnet, daß der Niederhalter elastisch am Frontschild gelagert ist.

19. Schervorrichtung nach Anspruch 18, dadurch gekennzeichnet, daß die elastische Lagerung eine Feder umfasst.

20. Schervorrichtung nach Anspruch 18, dadurch gekennzeichnet, daß die elastisch Lagerung eine hydraulische Einheit umfasst.

21. Schervorrichtung nach einem der Ansprüche 8 bis 20, dadurch gekennzeichnet, daß eines der Messer gegenüber dem anderen Messer beidseitig übersteht.

22. Schervorrichtung nach einem der Ansprüche 8 bis 21, dadurch gekennzeichnet, daß die Rahmenelemente gegeneinander verschwenkbar sind.

23. Schervorrichtung nach Anspruch 22, dadurch gekennzeichnet, daß die Rahmenelemente eine gemeinsame Schwenkachse aufweisen.

24. Schervorrichtung nach Anspruch 23, dadurch gekennzeichnet, daß die Schwenkachse am hinteren Bereich des Scherenbettes angeordnet ist.

25. Schervorrichtung nach einem der Ansprüche 22 bis 24, dadurch gekennzeichnet, daß ein am Frontschild angeordnetes Rahmenteil das Scherenbett untergreift.

26. Schervorrichtung nach einem der Ansprüche 8 bis 21, dadurch gekennzeichnet, daß die beiden Rahmenelemente parallelogrammartig gegeneinander verschiebbar sind.

27. Schervorrichtung nach einem der Ansprüche 8 bis 21, dadurch gekennzeichnet, daß die beiden Rahmenelemente durch eine Querschlittenführung miteinander verbunden sind.

28. Schervorrichtung nach einem der Ansprüche 8 bis 21, dadurch gekennzeichnet, daß das Frontschild mittels eines Kastenrahmens an der Querschlittenführung angeordnet ist.
